# EUROPEAN PATENT APPLICATION

(11) **EP 1 508 409 A1**
(43) Date of publication of application: **23.02.2005**
(21) Application number: 03723395.4
(22) Date of filing: 19.05.2003
(51) Int. Cl.: B25J 13/00, B25J 5/00

(54) **ROBOT DEVICE AND ROBOT CONTROL METHOD**

(30) Priority: 20.05.2002 JP 2002145334
(71) Applicant: Sony Corporation, Tokyo 141-0001 (JP)
(72) Inventor: SAWADA, Tsutomu c/o SONY CORPORATION, Shinagawa-ku, Tokyo 141-0001 (JP); FUJITA, Masahiro c/o SONY CORPORATION, Shinagawa-ku, Tokyo 141-0001 (JP); HANAGATA, Osamu c/o SONY CORPORATION, Shinagawa-ku, Tokyo 141-0001 (JP); TAKAGI, Tsuyoshi c/o SONY CORPORATION, Shinagawa-ku, Tokyo 141-0001 (JP)
(74) Representative: Pilch, Adam John Michael
(86) International application number: PCT/JP2003/006179
(87) International publication number: WO 2003/097308

(57) **Abstract**

The invention provides a robot apparatus and a robot controlling method wherein the robot apparatus can behave so that its user may not lose interest in the robot apparatus. A behavior management section (72) selects one of a seeking behavior and a knowledge utilizing behavior based on a behavior selection probability. When the behavior management section (72) executes the selected behavior (a), a reward (r) is provided from an environment/user (111). The behavior (72) updates a behavior value based on the reward (r) and applies the behavior value to the Boltzmann distribution to determine the behavior selection probability. Further, the behavior management section (72) varies the Boltzmann temperature based on input information. The present invention can be applied to a reinforced learning system for a robot.

## Description

### Technical Field

This invention relates to a robot apparatus and a robot controlling method, and more particularly to a robot apparatus and a robot controlling method wherein a robot can behave like a human being such that a user does not lose interest in the robot.

### Background Art

When a user of a robot apparatus which simulates a living body interacts with the robot apparatus, it is expected that the robot apparatus to behave "similarly to a human being".

In order to allow a robot apparatus to execute such a behavior as just mentioned, the robot apparatus should perform reinforced learning for acquisition of a behavior. The robot apparatus selects a behavior based on a behavior selection probability calculated from behavior values. The behavior values to be selected include behaviors directed principally to seeking (hereinafter referred to as seeking behaviors) and behaviors directed principally to use of knowledge (hereinafter referred to as knowledge utilizing behaviors). If a seeking behavior is selected, then the robot apparatus performs a new behavior different from those in the past. In contrast, if a knowledge utilizing behavior is selected, then the robot apparatus behaves in a generally expected manner.

However, with such conventional reinforced learning, the behavior selection probability is constant irrespective of the external state and the internal state of the robot apparatus.

Accordingly, it is difficult to cause a robot apparatus to behave like a human being such that the user does not lose interest in the robot apparatus.

### Disclosure of Invention

The present invention has been made in such a situation as described above, and it is an object of the present invention to make it possible for a robot apparatus to behave similarly to a human being such that the user does not lose interest in the robot apparatus.

According to the present invention, there is provided a robot apparatus, comprising behavior management means for selecting a behavior which is based on knowledge relating to behaviors in the past or a behavior which is not based on the knowledge relating to the behaviors in the past, and control means for controlling the robot apparatus, the control means controlling the robot apparatus based on the behavior selected by the behavior management means which is based on the knowledge relating to the behaviors in the past or is not based on the knowledge relating to the behaviors in the past to output a predetermined behavior.

The behavior which is based on the knowledge relating to the behaviors in the past may be a knowledge utilizing behavior, and the behavior which is not based on the knowledge relating to the behaviors in the past may be a seeking behavior.

The behavior management means may select one of the knowledge utilizing behavior and the seeking behavior based on a behavior selection probability.

The behavior selection probability may vary in response to a reward from a user for a behavior executed by the robot apparatus.

The behavior selection probability may vary based on the Boltzmann temperature.

The robot apparatus may hold a feeling parameter which determines a feeling of the robot apparatus, and the Boltzmann temperature may vary based on the feeling parameter.

According to the present invention, there is provided a robot controlling method for a robot apparatus, comprising a behavior management step of selecting a behavior which is based on knowledge relating to behaviors in the past or a behavior which is not based on the knowledge relating to the behaviors in the past, and a control step of controlling the robot apparatus, the process at the control step controlling the robot apparatus based on the behavior selected by the process at the behavior management step which is based on the knowledge relating to the behaviors in the past or is not based on the knowledge relating to the behaviors in the past to output the predetermined behavior.

In the robot apparatus and the robot controlling method of the present invention, one of a behavior which is based on knowledge relating to behaviors in the past and another behavior which is not based on the knowledge relating to the behaviors in the past is selected. Then, the robot apparatus is controlled based on the selected behavior which is based on the knowledge relating to the behaviors in the past or is not based on the knowledge relating to the behaviors in the past to output a predetermined behavior.

### Brief Description of Drawings

FIG. 1 is a perspective view showing an example of a configuration of an appearance of a pet robot to which the present invention is applied;
FIG. 2 is a block diagram showing an example of an internal configuration of the pet robot of FIG. 1;
FIG. 3 is a view showing an example of a configuration of a functioning module of the pet robot;
FIG. 4 is a view schematically showing an example of functions of an instinct-feeling management section of FIG. 3;
FIG. 5 is a view showing a configuration of a reinforced learning system to which the present invention is applied;
FIG. 6 is a flow chart illustrating a process for arithmetically operating the Boltzmann temperature based on a feeling parameter;
FIG. 7 is a view illustrating an example of a variation of the Boltzmann temperature based on a feeling parameter;
FIG. 8 is a flow chart illustrating a process for arithmetically operating the Boltzmann temperature based on an instinct parameter;
FIG. 9 is a view illustrating an example of a variation of the Boltzmann temperature based on an instinct parameter;
FIG. 10 is a flow chart illustrating a process for determining the Boltzmann temperature based on a place;
FIG. 11 is a view illustrating an example of a variation of the Boltzmann temperature based on a place;
FIG. 12 is a flow chart illustrating a process for arithmetically operating the Boltzmann temperature based on time;
FIG. 13 is a view illustrating an example of a variation of the Boltzmann temperature based on time;
FIG. 14 is a flow chart illustrating a process for arithmetically operating the Boltzmann temperature based on growth time; and
FIG. 15 is a view illustrating an example of a variation of the Boltzmann temperature based on growth time.

### Best Mode for Carrying out the Invention

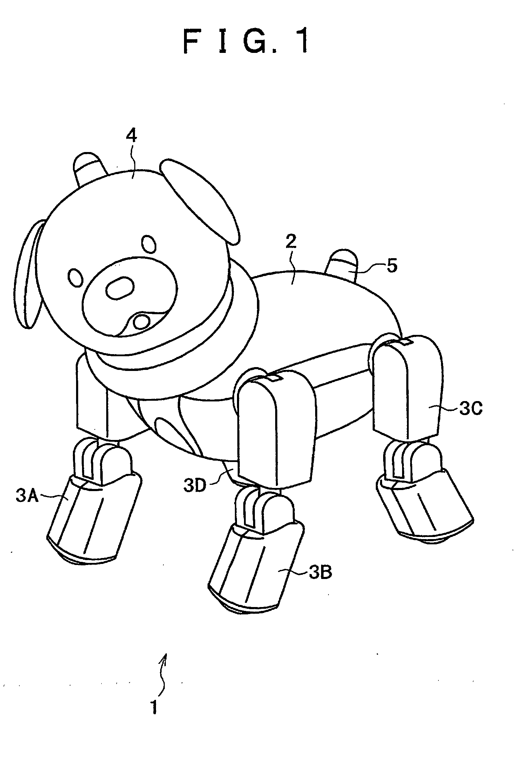

In the following, an embodiment of the present invention is described with reference to the drawings. FIG. 1 is a perspective view showing an example of a pet robot 1 to which the present invention is applied.

The pet robot 1 has a configuration of, for example, a little bear having four legs and comprises leg part units 3A, 3B, 3C and 3D connected to the left and right sides of front and rear portions of a body part unit 2, respectively. Meanwhile, a head part unit 4 and a tail part unit 5 are connected to a front end portion and a rear end portion of the body part unit 2.

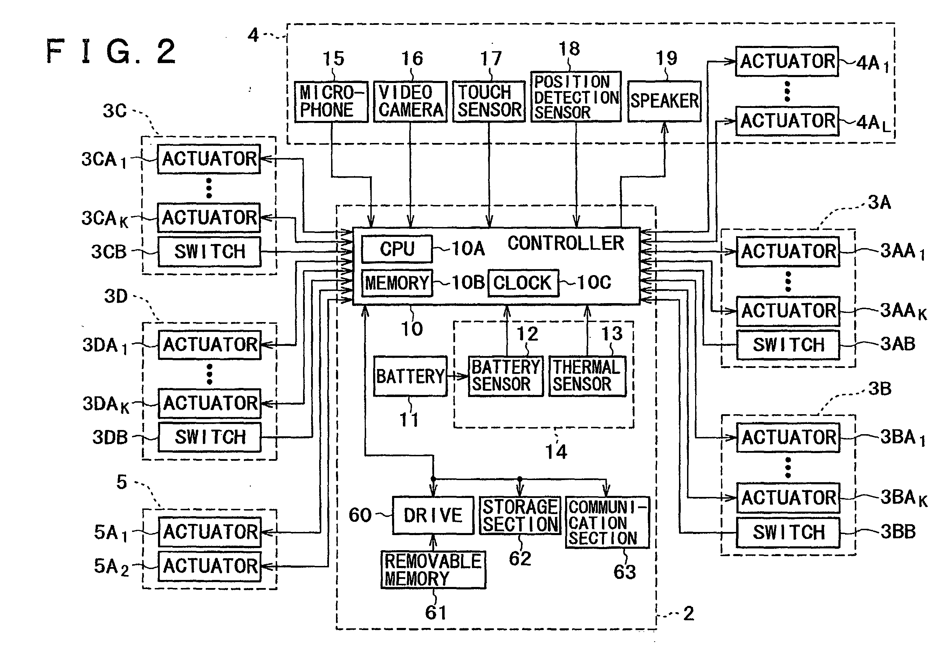

FIG. 2 is a block diagram showing an example of an internal configuration of the pet robot 1 of FIG. 1. The body part unit 2 accommodates a controller 10 for controlling the entire pet robot 1, a battery 11 for supplying power to components of the pet robot 1, and an internal sensor 14 including a battery sensor 12 and a thermal sensor 13. The controller 10 comprises a CPU (Central Processing Unit) 10A, a memory 10B in which a program in accordance with which the CPU 10A controls the components is stored, and a clock 10C for performing a time measuring operation to measure the date and hour at present, elapsed time after activation and so forth.

The CPU 10A is connected to a communication section 63 for communicating data through a network represented by the Internet and a storage section 62 formed from a semiconductor memory or the like for storing various data of a program and so forth. Further, when necessary, a drive 60 for reading or writing data from or onto a recording medium such as a removable memory 61 is connected to the CPU 10A.

A robot controlling program for allowing the pet robot 1 to execute operation as a robot apparatus to which the present invention is applied is supplied in a form stored in the removable memory 61 to the pet robot 1, read out by the drive 60 and installed into a hard disk drive built in the storage section 62. The robot controlling program installed in the storage section 62 is loaded from the storage section 62 into the memory 10B and executed in accordance with an instruction of the CPU 10A corresponding to a command inputted by the user.

The head part unit 4 comprises a microphone 15, a video camera 16 and a touch sensor 17 as sensors for sensing an external stimulus at individually predetermined positions. The microphone 15 corresponds to an "auditory organ like the ears" for sensing sound. The video camera 16 is formed from a CCD (Charge Coupled Device) unit, a CMOS (Complementary Metal Oxide Semiconductor) unit, an image sensor and so forth and corresponds to a "visual organ like the eyes" for acquiring an external image signal. The touch sensor 17 corresponds to a "tactile organ like the skin" for sensing a pressure or the like applied when a user touches. Further, a position detection sensor 18 and a speaker 19 are located at individually predetermined positions on the head part unit 4. The position detection sensor 18 measures the distance to an object. The speaker 19 corresponds to a "vocal organ like the mouth" of the pet robot 1 which outputs a predetermined sound scale.

An actuator is provided at each of joint portions of the leg part units 3A to 3D, joint portions between the leg part units 3A to 3D and the body part unit 2, a joint portion between the head part unit 4 and the body part unit 2, a joint portion between the tail part unit 5 and the body part unit 2, and other necessary portions. The actuators actuate the respective portions in accordance with an instruction from the controller 10.

In the example of FIG. 2, actuators 3AA₁ to 3AA_{K} are provided in the leg part unit 3A, and actuators 3BA₁ to 3BA_{K} are provided in the leg part unit 3B. Further, actuators 3CA₁ to 3CAₖ are provided in the leg part unit, 3C, and actuators 3DA₁ to 3DAₖ are provided in the leg part unit 3D. Furthermore, actuators 4A₁ to 4A_{L} are provided in the head part unit 4, and actuators 5A₁ and 5A₂ are provided in the tail part unit 5.

In the following description, where there is no necessity to individually distinguish the leg part units 3AA₁ to 3DAₖ provided in the leg part units 3A to 3D, the actuators 4A₁ to 4A_{L} provided in the head part unit 4 and the actuators 5A₁ and 5A₂ provided in the tail part unit from one another, they are referred to collectively as actuators 3AA₁ to 5A₂.

Further, in addition to the actuators, switches 3AB to 3DB are located at locations of the pet robot 1 corresponding to the soles on the leg part units 3A to 3D, respectively. When the pet robot 1 walks, the switches 3AB to 3DB are depressed, and thereupon, signals representing such depression are inputted to the controller 10.

The microphone 15 provided on the head part unit 4 collects voice (sound) from therearound including utterances of the user and outputs a resulting sound signal to the controller 10. The video camera 16 picks up an image of a situation therearound and outputs a , resulting image signal to the controller 10. The touch sensor 17 is provided, for example, at an upper portion of the head part unit 4 and detects a pressure applied thereto through a physical approach such as "stroking" or "patting" from the user and outputs a result of the detection as a pressure detection signal to the controller 10. The position detection sensor 18 emits, for example, infrared rays and outputs a result of detection at a timing at which reflected light of the infrared rays is received to the controller 10.

The controller 10 discriminates a surrounding situation, an instruction from the user, presence/absence of an approach from the user and so forth based on a sound signal, an image signal, a pressure detection signal and so forth supplied thereto from the microphone 15, video camera 16, touch sensor 17 and position detection sensor 18. Then, the controller 10 determines an action to be executed subsequently by the pet robot 1 based on a result of the discrimination. The controller 10 thus drives necessary actuators based on the determination so that such an action as to oscillate the head part unit 4 upwardly, downwardly, leftwardly or rightwardly, move the tail part unit 5 or drive the leg part units 3A to 3D to cause the pet robot 1 to walk is executed.

In addition, the controller 10 performs a process for causing an LED (Light Emitting Diode) not shown provided on the head part unit 4 or the like of the pet robot 1 to be turned on or off or to blink and other necessary processes.

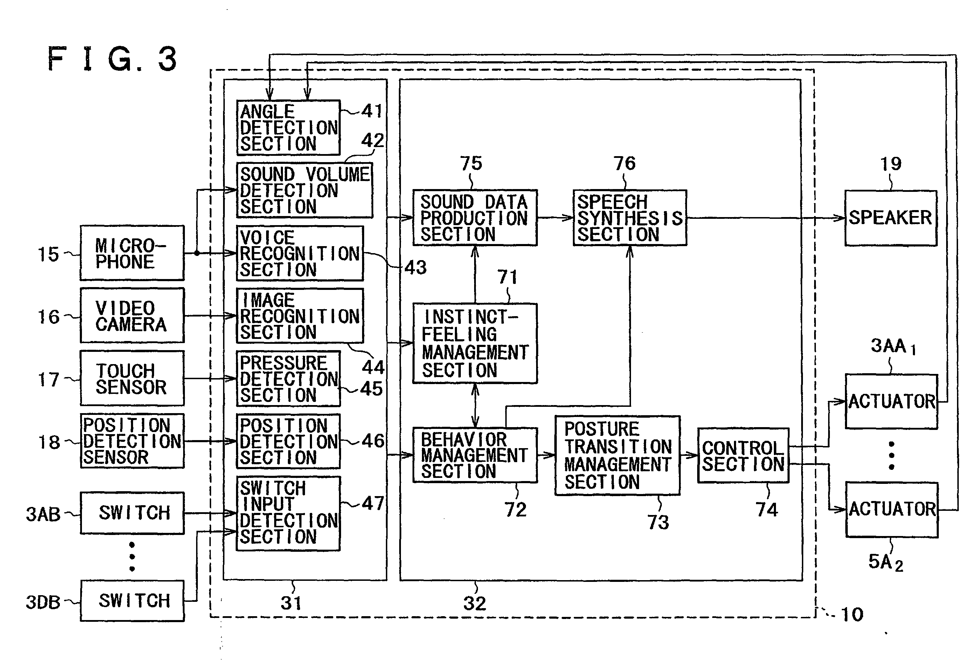

FIG. 3 is a block diagram showing an example of a functioning configuration of the controller 10 of FIG. 2. It is to be noted that the functions indicated in FIG. 3 are implemented by the CPU 10A executing the controlling program stored in the memory 10B.

The controller 10 comprises a sensor input processing section 31 and an information processing section 32. The sensor input processing section 31 detects various signals from sensors for detecting external stimuli (the sensors from the microphone 15 to position detection sensor 18 and the switches 3AB to 3DB). The information processing section 32 causes the pet robot 1 to operate based on information detected by the sensor input processing section 31 and so forth.

An angle detection section 41 which composes the sensor input processing section 31 detects, when motors provided for the actuators 3AA₁ to 5A₂ are driven, the angles of the motors based on information conveyed from the actuators 3AA₁ to 5A₂, respectively. The angle information detected by the angle detection section 41 is outputted to a behavior management section 72 and a sound data production section 75 of the information processing section 32.

A sound volume detection section 42 detects a sound volume based on a signal supplied thereto from the microphone 15 and outputs the detected sound volume information to the behavior management section 72 and the sound data production section 75.

A voice recognition section 43 recognizes a sound signal supplied thereto from the microphone 15. The voice recognition section 43 notifies an instinct-feeling management section 71, the behavior management section 72 and the sound data production section 75 of an instruction such as, for example, "let's talk", "walk", "sit down" or "chase the ball" or some other utterance as a result of the sound recognition as sound recognition information.

An image recognition section 44 uses an image signal supplied thereto from the video camera 16 to perform image recognition. If the image recognition section 44 detects, as a result of the image recognition process, for example, "something red and round", "a face perpendicular to the ground and having a height greater than a predetermined level", "a wide and open place", "a family is present", "a friend of a child in a family is present" or the like, then it notifies the instinct-feeling management section 71, behavior management section 72 and sound data production section 75 of an image recognition result such as "there is a ball", "there is a wall", "this is a farm", "this is a house", "this is a school" or the like as image recognition information.

A pressure detection section 45 processes a pressure detection signal supplied thereto from the touch sensor 17. For example, if the pressure detection section 45 detects a pressure higher than a predetermined threshold value which continues for a short period of time as a result of the process, then it recognizes that the pet robot 1 is "tapped (scolded)", but if the pressure detection section 45 detects a pressure lower than the predetermined threshold value which continues for a long period of time, then it recognized that the pet robot is "stroked (praised)". Then, the pressure detection section 45 notifies the instinct-feeling management section 71, behavior management section 72 and sound data production section 75 of a result of the detection as state recognition information.

A position detection section 46 measures the distance to a predetermined object based on a signal supplied thereto from the position detection sensor 18 and notifies the behavior management section 72 and sound data production section 75 of the distance information. For example, the position detection section 46 detects the distance to a hand when the hand of the user or some other thing is stretched out in front of the pet robot 1, or detects the distance to a ball recognized by the image recognition section 44.

A switch input detection section 47 notifies the instinct-feeling management section 71 and behavior management section 72 based on signals supplied thereto from the switches 3AB to 3DB provided at portions of the pet robot 1 corresponding to the soles, for example, of the walking timing in a state wherein the pet robot 1 is walking or that one of the soles is touched by the user.

Meanwhile, the instinct-feeling management section 71 which composes the information processing section 32 manages the instinct and the feeling of the pet robot 1 and outputs a parameter representative of an instinct or a parameter representative of a feeling of the pet robot 1 to the behavior management section 72 and the sound data production section 75.

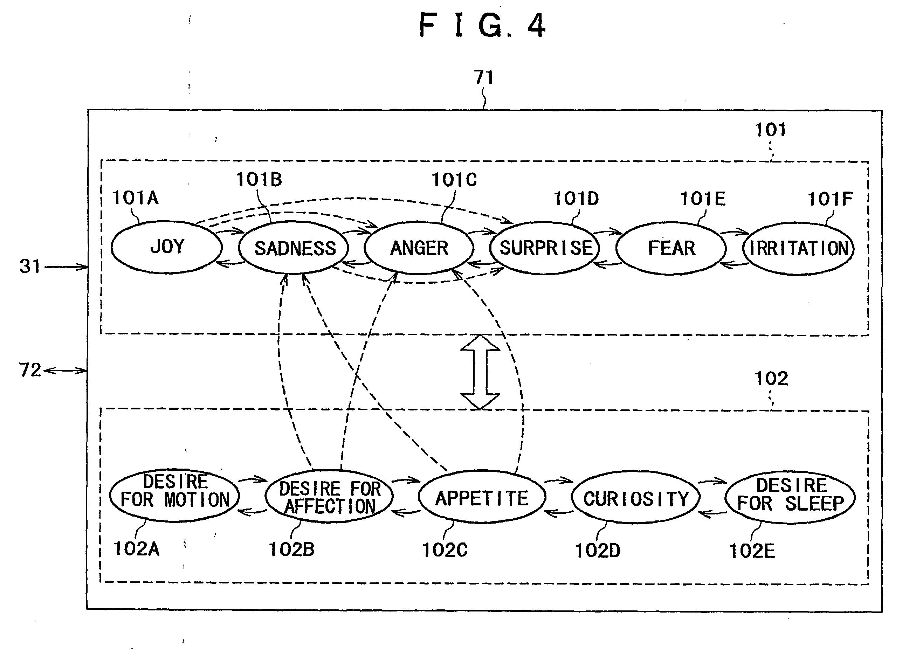

Parameters representative of instincts and parameters representative of feelings of the pet robot 1 are described with reference to FIG. 4. As shown in FIG. 4, the instinct-feeling management section 71 stores and manages a feeling model 101 representing the feeling of the pet robot 1 and an instinct model 102 representing the instinct of the pet robot 1.

The feeling model 101 represents the states (degrees) of the feelings such as, for example, the "joy", "sadness", "anger", "surprise", "fear" and "irritation" by feeling parameters within a predetermined range (for example, from 0 to 100). Then, the feeling model 101 varies the values of the feeling parameters based on outputs of the voice recognition section 43, image recognition section 44 and pressure detection section 45 of the sensor input processing section 31, the lapse of time and so forth.

In the present example, the feeling model 101 comprises a feeling unit 101A representative of the "joy", a feeling unit 101B representative of the "sadness", a feeling unit 101C representative of the "anger", a feeling unit 101D representative of the "surprise", a feeling unit 101E representative of the "fear" and a feeling unit 101F representative of the "irritation".

The instinct model 102 represents the states (degrees) of desires by the instincts such as, for example, the "desire for motion", "desire for affection", "appetite", "curiosity" and "desire for sleep" by parameters of the instincts within a predetermined range (for example, from 0 to 100). Then, the instinct model 102 varies the values of the parameters based on the outputs of the voice recognition section 43, image recognition section 44, pressure detection section 45 and so forth, the lapse of time and so forth. Further, the instinct model 102 increases the parameter representative of the "desire for motion" based on a behavior history or increases the parameter representative of the "appetite" based on the remaining amount (voltage) of the battery 11.

In the present example, the instinct model 102 comprises an instinct unit 102A representative of the "desire for motion", an instinct unit 102B representative of the "desire for affection", an instinct unit 102C. representative of the "appetite", an instinct unit 102D representative of the "curiosity" and an instinct unit 102E representative of the "desire for sleep".

The parameters of such feeling units 101A to 101F and instinct units 102A to 102E as mentioned above vary not only in response to an external input but also by mutual influence of the units as indicated by arrow marks in FIG. 4.

For example, the feeling unit 101A representative of the "joy" and the feeling unit 101B representative of the "sadness" couple in a reciprocally inhibiting manner to each other. Thus, the instinct-feeling management section 71 varies the feeling to be expressed such that, when the pet robot 1 is praised by the user, the parameter of the feeling unit 101A representative of the "joy" is increased while the parameter of the feeling unit 101B representative of the "sadness" is decreased.

Further, not only the units which compose the feeling model 101 and the units which compose the instinct model 102 vary their units within the individual models but also the units vary their parameters across the two models.

For example, as shown in FIG. 4, the parameter of the instinct unit 102B representative of the "sadness" or the instinct unit 102C representative of the "anger" of the feeling model 101 varies in response to a variation of the parameter of the instinct unit 102B representative of the "desire for affection" or the instinct unit 102C representative of the "appetite" of the instinct model 102.

More particularly, if the parameter of the instinct unit 102B representative of the "desire for affection" or the parameter of the instinct unit 102C representative of the "appetite" increases, then the parameter of the instinct unit 101B representative of the "sadness" and the parameter of the instinct unit 101C representative of the "anger" of the feeling model 101 decrease.

The instinct-feeling management section 71 measures the parameters of the feelings or the parameters of the instincts managed thereby in this manner in a predetermined period and outputs them to the behavior management section 72 and sound data production section 75.

It is to be noted that, to the instinct-feeling management section 71, not only recognition information is supplied from the voice recognition section 43, image recognition section 44, pressure detection section 45 and so forth, but also behavior information representative of contents of a behavior at present or in the past of the pet robot 1, for example, "the pet robot 1 walked for a long period of time" is supplied. Even if the same recognition information or the like is received, the instinct-feeling management section 71 produces different internal information in response to the behavior of the pet robot 1 indicated by the behavior information.

For example, if the pet robot 1 greets the user and is stroked at the head by the user, then behavior information that the pet robot 1 has greeted the user and recognition information that the pet robot 1 has been stroked at the head are supplied to the instinct-feeling management section 71. At this time, the instinct-feeling management section 71 increases the value of the feeling unit 101A representative of the "joy".

Referring back to FIG. 3, the behavior management section 72 determines a next behavior based on information supplied thereto from the behavior management section 72, voice recognition section 43, image recognition section 44 and so forth, parameters supplied thereto from the instinct-feeling management section 71, the lapse of time and so forth. Then, the behavior management section 72 outputs a command for instruction of execution of the determined behavior to a posture transition management section 73. The posture transition management section 73 determines a transition of the posture based on the behavior of the instruction received from the behavior management section 72 and outputs the transition of the posture to a control section 74. The control section 74 controls the actuators 3AA1 to 5A2 based on the output of the posture transition management section 73 to perform the motion determined by the behavior management section 72.

The sound data production section 75 produces sound data based on information supplied thereto from the voice recognition section 43, image recognition section 44 and so forth, parameters supplied thereto from the instinct-feeling management section 71, the lapse of time and so forth. Then, when the pet robot 1 should utter or when sound corresponding to a predetermined motion should be outputted from the speaker 19, the behavior management section 72 outputs a command for instruction to output sound to a speech synthesis section 76. The speech synthesis section 76 operates the speaker 19 to output sound based on the sound data outputted from the sound data production section 75.

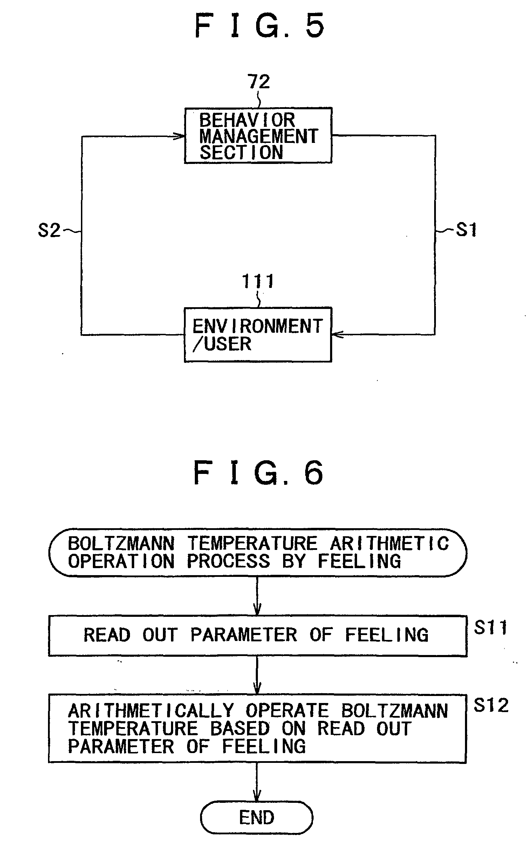

FIG. 5 illustrates a configuration in principle of a reinforced learning system to which the present invention is applied. At step S1, the behavior management section 72 selects, based on a behavior selection probability (expression (3) hereinafter given), one of a seeking behavior wherein the pet robot 1 moves at random and performs a new behavior and a knowledge utilizing behavior wherein the pet robot 1 selects one of behaviors performed in the past which seems best, and causes the pet robot 1 to execute the selected behavior a. At step S2, an environment-user 111 will provide a reward r for the behavior a to the pet robot 1. Here, the reward r is an action, for example, "stroking the head" performed by the environment-user 111 when the behavior a is correct or another action of, for example, "tapping the head" performed by the environment-user 111 when the behavior a is wrong (is not a behavior expected by the user).

The behavior management section 72 updates, based on the acquired reward r, a behavior value Q(a) with regard to the behavior a to a new behavior value Q₁(a) (based on the reward r) in accordance with the following expression (1):${\text{Q}}_{\text{1}} \text{(a)=(1-α)Q(a)+αr}$

It is to be noted that, in the expression (1), α is a coefficient of a value between 0 and 1 and is a parameter (learning rate) for determining to what degree the acquired reward should be reflected on the behavior value. Further, the reward r is a value determined in response to a detection signal from the sensor input processing section 31 such as a signal representing that "the pet robot 1 is stroked at the head", "the pet robot 1 is tapped", "the pet robot 1 achieves a given task" or "the pet robot 1 fails in a given task".

The behavior value Q(a) determined in this manner is updated every time the behavior a is executed and the reward r is acquired. Accordingly, where the behavior value Q₂(a) updated with a reward r₂ acquired newly is represented using the last behavior value Q₁(a) and a behavior value Q₀(a) preceding to the last behavior value Q₁(a),${\text{Q}}_{\text{2}} {\text{(a)=(1-α)Q}}_{\text{1}} {\text{(a)+αr}}_{\text{2}} {\text{=(1-α)}}^{\text{2}} {\text{Q}}_{\text{0}} {\text{(a)+(1-α)αr}}_{\text{1}} {\text{+αr}}_{\text{2}}$ Since the learning rate α has a value between 0 and 1, the coefficient α of the reward r₂ acquired newly is higher than the coefficient (1-α)α of the preceding reward r₁ without fail. Accordingly, the behavior value Q₂(a) has a weight higher on the newly received reward r₂ than on the reward r₁ in the past. In other words, the behavior value Q(a) reflects a reward received latest more than a reward in a remote past as given in the expression (2).

Further, the behavior management section 72 arithmetically operates a behavior selection probability P(a) of the behavior a based on the behavior value Q(a) determined in this manner in accordance with an expression (3) of the Boltzmann distribution given below:

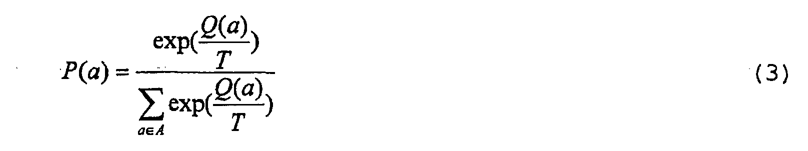

It is to be noted that, in the expression (3), A represents all behaviors which can be selected. T represents the Boltzmann temperature and is a parameter which determines to what degree the behavior value Q(a) should be reflected on the behavior selection probability P.

As can be seen from the expression (3), as the value of the Boltzmann temperature T decreases, the behavior value Q(a) is reflected by an increased amount on the behavior selection probability P, and the behavior management section 72 selects a behavior having a higher information utilizing tendency. On the other hand, as the value of the Boltzmann temperature T increases, the behavior value Q(a) is less likely to be reflected as much on the behavior selection probability P, and the behavior management section 72 selects a behavior having a higher seeking tendency.

In the present invention, selection of a seeking behavior and a knowledge utilizing behavior is changed dynamically. To this end, the behavior management section 72 suitably varies the Boltzmann temperature T in response to an output of a parameter of a feeling from the instinct-feeling management section 71. A process in this instance is described with reference to FIG. 6.

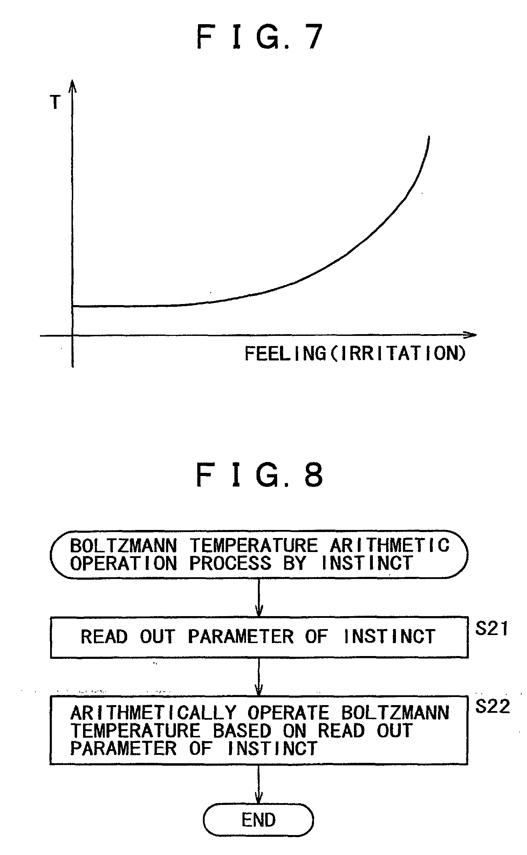

At step S11, the behavior management section 72 reads out a parameter of a feeling from the instinct-feeling management section 71. At step S12, the behavior management section 72 arithmetically operates the Boltzmann temperature T based on the read out parameter of the feeling in accordance with an expression or a table (for example, in the case of the example of FIG. 7, an expression or a table representative of a relationship between the "irritation" and the Boltzmann temperature T) stored in the memory 10B.

An example of the Boltzmann temperature T arithmetically operated based on the parameter representative of the "irritation" is illustrated in FIG. 7. As seen in FIG. 7, as the value of the parameter representative of the "irritation" increases, the value of the Boltzmann temperature T increases. Accordingly, as the value of the parameter representative of the "irritation" increases, the behavior value Q(a) is less likely to be reflected on the behavior selection probability P, and the pet robot 1 performs a behavior having a higher seeking tendency. In other words, the pet robot 1 is less likely to perform a rational behavior when it is irritated similarly to the human being.

The Boltzmann temperature T may be varied in response to an output of a parameter of an instinct from the instinct-feeling management section 71. A process in this instance is described with reference to FIG. 8.

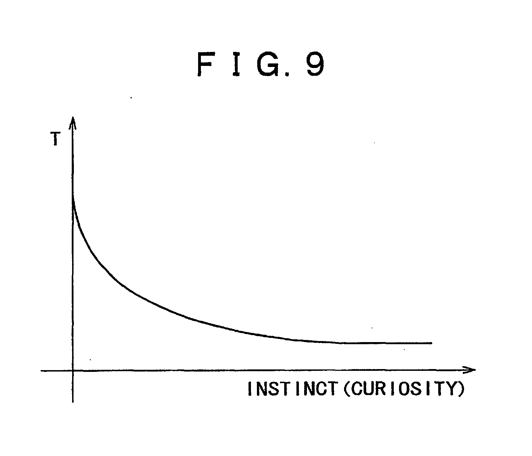

At step S21, the behavior management section 72 reads out a parameter of an instinct from the instinct-feeling management section 71. At step S22, the behavior management section 72 arithmetically operates the Boltzmann temperature T based on the read out parameter of the instinct in accordance with an expression or a table (for example, in the case of the example of FIG. 9, an expression or a table representative of a relationship between the "curiosity" and the Boltzmann temperature T) stored in the memory 10B.

An example of the Boltzmann temperature T arithmetically operated based on the parameter representative of the "curiosity" is illustrated in FIG. 9. In the case of the example of FIG. 9, as the value of the parameter representative of the "curiosity" increases, the value of the Boltzmann temperature T decreases. Accordingly, as the value of the parameter representative of the "curiosity" increases, the behavior value Q(a) is less likely to be reflected on the behavior selection probability P, and the pet robot 1 performs a behavior having a higher information utilizing tendency. In other words, when the pet robot 1 has curiosity, it performs its behavior in a concentrated (enthusiastic) manner similarly to the human being.

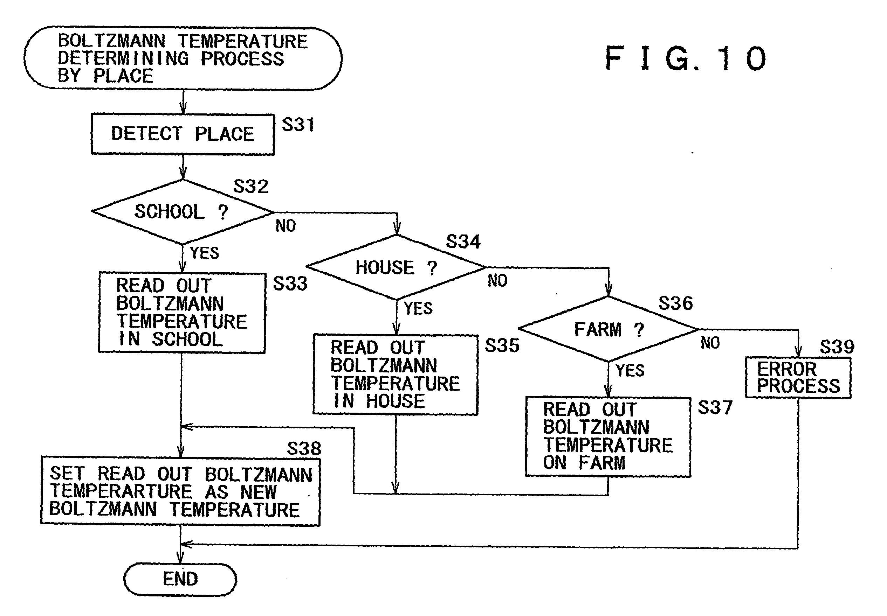

Further, the behavior management section 72 can vary the Boltzmann temperature T in response to information relating to a place from the image recognition section 44. A process in this instance is described with reference to FIG. 10.

At step S31, the behavior management section 72 detects a place where the pet robot 1 is positioned from an output of the image recognition section 44. At step S32, the behavior management section 72 discriminates whether or not the place where the pet robot 1 is positioned is a school. If it is discriminated at step S32 that the place where the pet robot 1 is positioned is a school, then the behavior management section 72 advances its processing to step S33, at which it reads out the Boltzmann temperature T with regard to a school from the memory 20B.

If it is discriminated at step S32 that the place where the pet robot 1 is positioned is not a school, then the behavior management section 72 advances its processing to step S34, at which it discriminates whether or not the place where the pet robot 1 is positioned is a house. If it is discriminated at step S34 that the place where the pet robot 1 is positioned is a house, then the behavior management section 72 advances its processing to step S35, at which it reads out the Boltzmann temperature T with regard to a house from the memory 10B.

If it is discriminated at step S34 that the place where the pet robot 1 is positioned is not a house, then the behavior management section 72 advances its processing to step S36, at which it discriminates whether or not the place where the pet robot 1 is positioned is a farm. If it is discriminated at step S36 that the place where the pet robot 1 is positioned is a farm, then the behavior management section 72 advances its processing to step S37, at which it reads out the Boltzmann temperature T with regard to a farm from the memory 10B.

After the processing at step S33, S35 or S37, the behavior management section 72 sets the read out Boltzmann temperature T as a new Boltzmann temperature T at step S38. Then, the processing is ended.

If it is discriminated at step S36 that the place where the pet robot 1 is positioned is not a farm, then the behavior management section 72 advances its processing to step S39, at which it performs an error process, and thereafter ends the process.

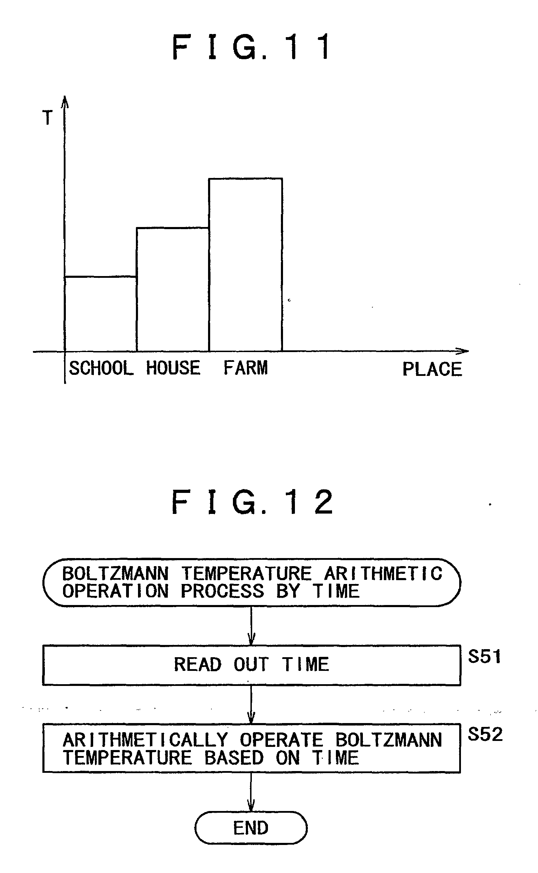

An example of the value of the Boltzmann temperature T which depends upon the place is illustrated in FIG. 11. When the pet robot 1 is positioned in a school, the value of the Boltzmann temperature T is lowest, and the behavior value Q(a) is reflected on the behavior selection probability P and the pet robot 1 performs a knowledge utilizing behavior. In other words, the pet robot 1 performs a fixed behavior when it is in a school similarly to the human being.

When the pet robot 1 is positioned in a house, the Boltzmann temperature T has a mean value, and the pet robot 1 performs a knowledge utilizing behavior and a seeking behavior in a well-balanced state. Then, when the pet robot 1 is positioned on a farm, the value of the Boltzmann temperature T is highest and the behavior value Q(a) is least likely to be reflected on the behavior selection probability P. Accordingly, the pet robot 1 performs a behavior having a high seeking tendency. In other words, the pet robot 1 performs a new behavior frequently when it is at an open place such as a farm.

Also it is possible for the Boltzmann temperature T to vary in response to the time. A process in this instance is described with reference to FIG. 12.

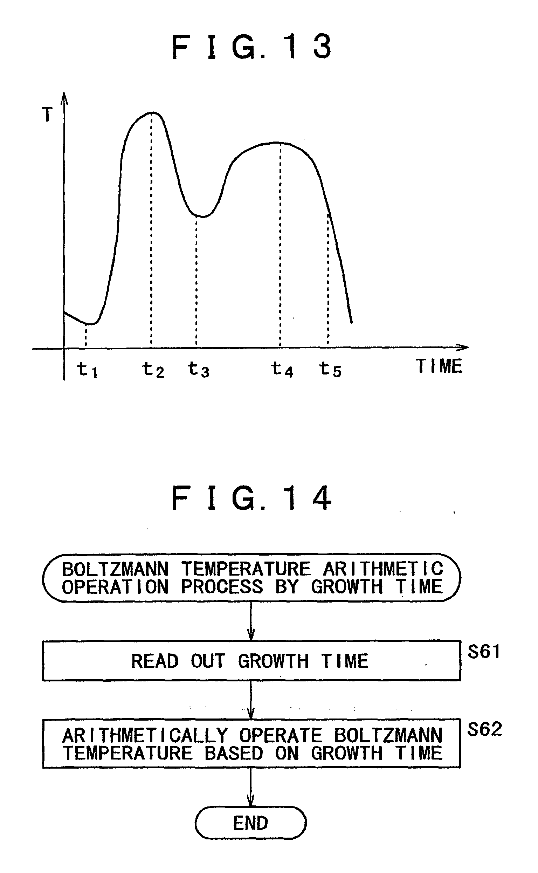

At step S51, the behavior management section 72 reads out the current time from the clock 10C. At step S52, the behavior management section 72 arithmetically operates the Boltzmann temperature T based on the thus read out time in accordance with an expression or a table (for example, in the case of the example of FIG. 13, an expression or a table representative of a relationship between "time within a stream of time of one day" and the Boltzmann temperature T) stored in the memory 10B.

An example wherein the behavior management section 72 varies the Boltzmann temperature T based on the time is illustrated in FIG. 13. At time t1 immediately after the pet robot 1 rises in the morning, the Boltzmann temperature T exhibits the lowest value, and the pet robot 1 performs a knowledge utilizing behavior (fixed behavior) but does not perform a new behavior. Then, as time passes, the Boltzmann temperature T rises gradually, and at time t2 immediately after the pet robot 1 has a breakfast, the Boltzmann temperature T exhibits the highest value. Accordingly, within a time zone after the breakfast is had, the pet robot 1 performs a seeking behavior (new behavior) and moves actively.

After the pet robot 1 has the breakfast and moves actively, the Boltzmann temperature T gradually decreases till time t3 at which the pet robot 1 becomes sleepy. Accordingly, within a time zone within which the pet robot 1 is sleepy around time t3, the pet robot 1 performs a knowledge utilizing behavior (fixed behavior) and does not move actively (however, the pet robot 1 moves more actively than within the time zone around time t1). Thereafter, the Boltzmann temperature T gradually rises till time t4 from the evening to the night, and the pet robot 1 performs a seeking behavior (new behavior) again (the pet robot 1 performs an action at an intermediate level between those within the time zone of time t2 and the time zone of time t3).

As time t5 before the pet robot 1 sleeps approaches, the Boltzmann temperature T decreases, and the pet robot 1 gradually comes to perform a knowledge utilizing behavior (fixed behavior). Then, the pet robot 1 sleeps. In this manner, the pet robot 1 performs behaviors similar to those of the human being within a stream of time of one day.

Further, the Boltzmann temperature T may be varied in response to the lapse of time after it is activated (growth time of the pet robot 1). A process in this instance is described with reference to FIG. 14.

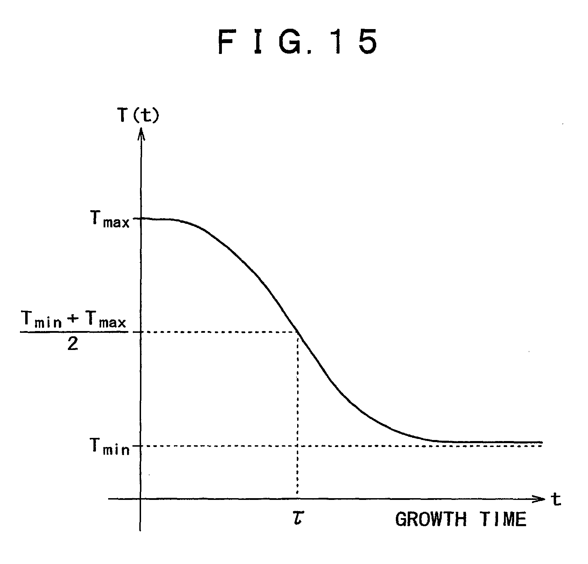

At step S61, the behavior management section 72 reads out time (growth time) after the pet robot 1 was born (activated) from the clock 10C. At step S62, the behavior management section 72 arithmetically operates the Boltzmann temperature T based on the read out growth time in accordance with an expression or a table (for example, in the case of the example of FIG. 15, an expression or a table representative of a relationship between the "growth time" and the Boltzmann temperature T) stored in the memory 10B.

The behavior management section 72 varies the Boltzmann temperature T based on the growth time t in accordance with the expression (4) given below:$\text{T} \text{(} \text{t} \text{) =} {\text{T}}_{\text{min}} \text{+ (} {\text{T}}_{\text{max}} \text{-} {\text{T}}_{\text{min}} \text{) ×} \text{sigmoid} \text{(} \text{t} \text{-τ) =} {\text{T}}_{\text{min}} \text{+} \frac{{\text{T}}_{\text{max}} {\text{- T}}_{\text{min}}}{{\text{1 + e}}^{\text{β(t-r)}}}$

It is to be noted that, in the expression (4), τ represents the reference time, and β the rate of change around the reference time. Further, Tₘᵢₙ and Tₘₐₓ represent minimum and maximum Boltzmann temperatures, respectively.

An example of a variation of the Boltzmann temperature T calculated using the expression (4) is illustrated in FIG. 15. As shown in FIG. 15, the Boltzmann temperature T when the pet robot 1 is born (at the beginning of activation) (t = 0) has its maximum value represented by Tₘₐₓ and the pet robot 1 frequently performs a seeking behavior (new behavior). Thereafter, as the time (age) passes, the Boltzmann temperature T decreases gradually. Then, the Boltzmann temperature T finally converges to its minimum value represented by Tₘᵢₙ, and the pet robot 1 frequently performs a knowledge utilizing behavior (behavior learned in the past). In other words, the pet robot 1 becomes less likely to perform a seeking behavior (new behavior) as it grows older, and frequently performs a knowledge utilizing behavior (fixed behavior) as those of the human being does. At the reference time (reference age) τ set in advance, the Boltzmann temperature T exhibits a middle value between the maximum value and the minimum value.

It is to be noted that the series of processes described above may be executed not only by such a pet robot of an animal type as shown in FIG. 1 but also by, for example, a humanoid which can walk by bipedal walking, a virtual robot which moves in a computer, or the like. Further, in the present specification, the robot comprises an artificial agent.

While the series of processes described above can be executed by hardware, it may otherwise be executed by software. Where the series of processes is executed by software, a program which constructs the software is installed from a network or a recording medium into a robot apparatus incorporated in hardware for exclusive use or, for example, a robot apparatus for universal use which can execute various functions by installing various programs.

The recording medium may be formed as a package medium such as, as shown in FIG. 2, the removable memory 61 which has the program recorded thereon or therein and is distributed in order to provide the program to a user separately from an apparatus body, or as a hard disk included in the memory 10B which has the program recorded thereon and is provided to a user in a form wherein it is incorporated in advance in an apparatus body.

It is to be noted that, in the present specification, the steps which describe the program recorded in or on a recording medium may be but need not necessarily be processed in a time series in the order as described, and include processes which are executed parallelly or individually without being processed in a time series.

### Industrial Applicability

As described above, according to the present invention, a robot apparatus can be operated. Further, the robot apparatus can provide a pseudo-feeling more like a life to its user through a behavior thereof. Accordingly, the robot in which the user does not lose interest can be implemented.

## Claims

1. A robot apparatus which outputs a predetermined behavior, comprising:
behavior management means for selecting a behavior which is based on knowledge relating to behaviors in the past or a behavior which is not based on the knowledge relating to the behaviors in the past; and
control means for controlling said robot apparatus;
said control means controlling said robot apparatus based on the behavior selected by said behavior management means which is based on the knowledge relating to the behaviors in the past or is not based on the knowledge relating to the behaviors in the past to output the predetermined behavior.

2. A robot apparatus according to claim 1, wherein the behavior which is based on the knowledge relating to the behaviors in the past is a knowledge utilizing behavior, and
the behavior which is not based on the knowledge relating to the behaviors in the past is a seeking behavior.

3. A robot apparatus according to claim 2, wherein said behavior management means selects one of the knowledge utilizing behavior and the seeking behavior based on a behavior selection probability.

4. A robot apparatus according to claim 3, wherein the behavior selection probability varies in response to a reward from a user for a behavior executed by said robot apparatus.

5. A robot apparatus according to claim 3, wherein the behavior selection probability varies based on the Boltzmann temperature.

6. A robot apparatus according to claim 5, wherein said robot apparatus holds a feeling parameter which determines a feeling of said robot apparatus, and
the Boltzmann temperature varies based on the feeling parameter.

7. A robot controlling method for a robot apparatus which outputs a predetermined behavior, comprising:
a behavior management step of selecting a behavior which is based on knowledge relating to behaviors in the past or a behavior which is not based on the knowledge relating to the behaviors in the past; and
a control step of controlling said robot apparatus;
the process at the control step controlling said robot apparatus based on the behavior selected by the process at the behavior management step which is based on the knowledge relating to the behaviors in the past or is not based on the knowledge relating to the behaviors in the past to output the predetermined behavior.
